(19) Europäisches Patentamt
European Patent Office
Office européen des brevets

(11) **EP 1 791 003 A1**

(12) **EUROPEAN PATENT APPLICATION**

(43) Date of publication:
**30.05.2007 Bulletin 2007/22**

(51) Int Cl.:
***G02B 5/22*** *(2006.01)* ***G02F 1/1335*** *(2006.01)*

(21) Application number: **06124376.2**

(22) Date of filing: **20.11.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **24.11.2005 JP 2005338258**

(71) Applicant: **Sumitomo Chemical Company, Limited Tokyo 104-8260 (JP)**

(72) Inventor: **Kanaya, Hiroko Niihama-shi Ehime (JP)**

(74) Representative: **Vossius & Partner Siebertstrasse 4 81675 München (DE)**

(54) **Wavelength-selective light-absorbing optical element**

(57)   A wavelength-selective light-absorbing optical element in which a light transmittance at a wavelength of 450 nm (T450), a light transmittance at a wavelength of 545 nm (T545) and a light transmittance at a wavelength of 610 nm (T610) satisfy the following relationship (I):

$$T450 < T545 < T610 \qquad (I)$$

Fig. 1

## Description

The present invention relates to a wavelength-selective light-absorbing optical element. In particular, the present invention relates to a wavelength-selective light-absorbing optical element which is preferably installed and used in a color liquid crystal display (LCD).

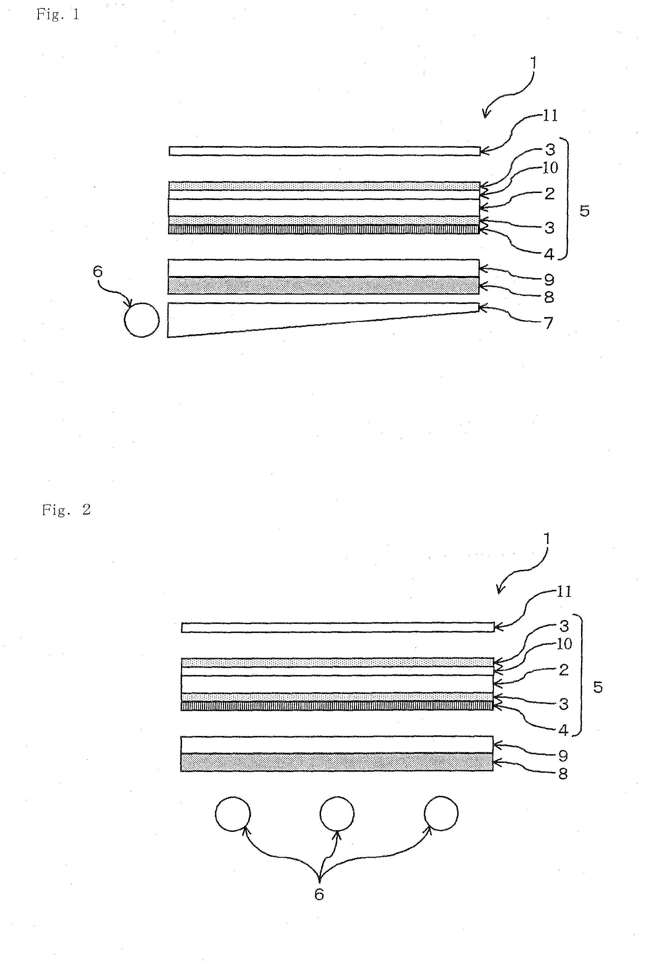

As shown in Figs. 1 and 2, a color LCD (1) comprises an image-displaying unit (5) and a light source (6) for illuminating the image-displaying unit (5) from its backside, and the image-displaying unit (5) comprises a liquid crystal cell (2), a pair of polarizing sheets (3) provided on the respective surfaces of the liquid crystal cell (2) and a color filter (4) which is provided on the surface of one of the polarizing sheets (3) and colors light that is transmitted through the liquid crystal cell (2) for color displaying. Such a color LCD is widely used as a display of a liquid crystal TV.

As the light source (6) constituting the color LCD, a cold cathode fluorescent lamp (CCFL) is generally used. On the light path between the CCFL and the image-displaying unit (5), optical elements such as a light-guide plate (7) for guiding the light from the CCFL towards the image-displaying unit (5) in the case of the side-edge type color LCD of Fig. 1, a light diffuser plate (8) for uniformly illuminating the image-displaying unit (5), a prismsheet (9), and the like are installed. Besides the polarizing sheets (3) and the color filter (4), the image-displaying unit (5) has a further optical element such as a retardation film (10) for displaying better quality images. Furthermore, a front plate (11) for externally protecting the image-displaying unit (5) is provided on the front face of the image-displaying unit (5).

With regard to such an optical element, as an optical element which can suppress the loss of light amount due to light scattering and/or light diffusion, JP-A-10-319231 discloses an optical element in which a light transmittance at a wavelength of 450 nm (T450), a light transmittance at a wavelength of 545 nm (T545) and a light transmittance at a wavelength of 610 nm (T610) satisfy the following relationship (A):

$$T450 > T545 > T610 \qquad (A)$$

However, the color LCD (1) comprising the conventional optical element or elements does not necessarily display a color image with satisfactory color reproducibility.

An object of the present invention is to provide an optical element which allows a color LCD to display a color image with better color reproducibility.

Accordingly, the present invention provides a wavelength-selective light-absorbing optical element wherein a light transmittance at a wavelength of 450 nm (T450), a light transmittance at a wavelength of 545 nm (T545) and a light transmittance at a wavelength of 610 nm (T610) satisfy the following relationship (I) :

$$T450 < T545 < T610 \qquad (I)$$

The wavelength-selective light-absorbing optical element according to the present invention is useful as an optical element constituting a display device. For example, a color LCD comprising the optical element of the present invention as a light diffuser plate has good color reproducibility of a color image. The invention is further described with reference to the drawings:

Fig. 1 is a schematic cross section of a side-edge type color LCD.

Fig. 2 is a schematic cross section of a beneath-type color LCD.

The wavelength-selective light-absorbing optical element of the present invention is installed and used in a color LCD (1).

As shown in Figs. 1 and 2, the color LCD (1) comprises an image-displaying unit (5) and a light source (6) for illuminating a color image displayed by the image-displaying unit (5) from its backside. In the color LCD of Figs. 1 and 2, a cold cathode fluorescent lamp (CCFL) is generally used as the light source (6).

The image-displaying unit (5) comprises a liquid crystal cell (2), a pair of polarizing sheets (3) provided on the respective surfaces of the liquid crystal cell (2) and a color filter (4) which is provided on the surface of one of the polarizing sheets (3). The color filter (4) colors light which is transmitted through the liquid crystal cell (2) for color displaying. The color filter is usually provided on the backside of the liquid crystal cell (2) between the liquid crystal cell (2) and the polarizing sheet (3). The image-displaying unit (5) may further comprise a retardation film (10) for displaying better quality images.

In the case of the side-edge type color LCD (1) shown in Fig. 1, one light source (6) is placed on the lateral side of the backside of the image-displaying unit (5). The light from the light source (6) is guided to the image-displaying unit (5) by the light-guide plate (7) and so on, then passes through the light diffuser plate (8) and the prism sheet (9) which are placed beneath the image-displaying unit (5), and uniformly illuminates the image-displaying unit (5).

The light-guide plate (7) is an optical element for guiding the light from the light source (6) placed on the lateral side of the backside of the image-displaying unit (5) towards the image-displaying unit (5). The light diffuser plate (8) is an optical element which allows the light from the light-guide plate (7) to pass through the plate (8) with diffusing the light. The prism sheet (9) is an optical element which allows the light to pass through the sheet (9) with refracting the light by prisms formed on the surface or inside of the sheet (9) so as to uniformly illuminate the image-displaying unit (5). The prism sheet (9) is usually provided between the light diffuser plate (8) and the image-displaying unit (5).

In the beneath-type color LCD shown in Fig. 2, at least one light source (6) is placed beneath the backside of the image-displaying unit (5), and uniformly illuminates the image-displaying unit (5) through the light diffuser plate (8 provided between the light source (6) and the image-displaying unit (5), and the prism sheet (9) provided between the light diffuser plate (8) and the image-displaying unit (5).

In the color LCD (1) of Fig. 1 or 2, a front plate (11) for externally protecting the image-displaying unit (5) is provided on the front face of the image-displaying unit (5). The image displayed by the image-displaying unit (5) is seen through the front plate (11).

The wavelength-selective light-absorbing optical element of the present invention can be used as follows:

(a) it may be installed along the light path from the light source (6) to the image-displaying unit (5) as the light-guide plate (7), the light diffuser plate (8), the prism sheet (9), etc.;
(b) it may be installed in the image-displaying unit (5) as the polarizing sheet (3), the retardation film (10), etc.;
(c) while it may be installed on the front face of the image-displaying unit (5) as the front plate (11), it is preferably provided along the light path from the light source (6) to the image-displaying unit (5), since the image plane of the image-displaying unit (5) is seen naturally black when no image is displayed or a black color image is displayed thereon.

In general, the wavelength-selective light-absorbing optical element of the present invention has a total light transmittance ($T_t$) of 40 to 95%.

In one preferred embodiment, the wavelength-selective light-absorbing optical element of the present invention has a light transmittance at a wavelength of 580 nm ($T_{580}$) satisfying the following equation (II):

$$T580 \leq 0.9 \times (T450+T545+T610)/3 \qquad (II)$$

or a light transmittance at a wavelength of 490 nm ($T_{490}$) satisfying the following equation (III):

$$T490 \leq 0.9 \times (T450+T545+T610)/3 \qquad (III)$$

More preferably, the light transmittance at a wavelength of 580 nm ($T_{580}$) satisfies the equation (II) and also the light transmittance at a wavelength of 490 nm ($T_{490}$) satisfies the equation (III) .

The light transmittance at a wavelength of 580 nm ($T_{580}$) and/or the light transmittance at a wavelength of 490 nm ($T_{490}$) may be 0%.

The wavelength-selective light-absorbing optical element of the present invention may comprise a transparent material containing at least one wavelength-selective light-absorbing agent dispersed therein. Although the transparent material may be inorganic glass, it is preferably a transparent resin such as a methacrylic resin, a polystyrene resin, a polycarbonate resin, etc. since the resin is easily processed to form a desired optical element.

As the wavelength-selective light-absorbing agent, a suitable combination of compounds used as dyes may be used. For example, a dye having the maximum absorption wavelength around 490 nm and a dye having the maximum absorption wavelength around 580 nm are used in combination. Examples of the dye having a maximum absorption wavelength around 490 nm include NK5705, NK3791 and NK1473 (all available from Hayashibara Biochemical Laboratories, Inc.). Examples of the dye having the maximum absorption wavelength around 580 nm include NK5450 (available from Hayashibara Biochemical Laboratories, Inc.), TAP2 (available from Yamada chemical Co., Ltd.), neodymium caprylate (Asada Chemical Industry Co., Ltd.).

The amounts of the dyes to be contained may vary with the kinds of the dyes, etc. and may adequately be selected so that the above relationship (I) and optionally the equations (II) and/or (III) are satisfied.

The wavelength-selective light-absorbing optical element comprising the transparent resin containing the wavelength-selective light-absorbing agents dispersed therein may be produced:

(i) by melting the transparent resin, adding the wavelength-selective light-absorbing agent, melt kneading a compound, and then shaping the compound by a conventional molding method such as extrusion molding, injection molding, press molding, etc.;

(ii) by mixing a monomer or monomers as a raw material or raw materials of the transparent resin, a polymerization initiator and the wavelength-selective light-absorbing agent, and polymerizing the monomer(s) in a mold;

(iii) by applying a coating material containing the wavelength-selective light-absorbing agent on the surface of the optical element made from the transparent resin to form a layer of the wavelength-selective light-absorbing agent; or

(iv) by impregnating the optical element made from the transparent resin with the wavelength-selective light-absorbing agent.

When the wavelength-selective light-absorbing optical element is in the form of a sheet or a film, it may be produced (v) by laminating a sheet or a film containing the wavelength-selective light-absorbing agent on a sheet or a film made of the transparent resin.

The wavelength-selective light-absorbing optical element of the present invention may optionally contain one or more conventional additives such as a light-diffusing agent, a filler, a mold-release agent, a UV absorber, a stabilizer such as an antioxidant, a flame-retardant, etc. as long as the effects of the present invention are not impaired. The surface of the wavelength-selective light-absorbing optical element may be smooth or minutely textured to scatter light.

EXAMPLE

The present invention will be illustrated by the following examples, which do not limit the scope of the present invention in any way.

Example 1

To 100 parts by weight of methyl methacrylate, 0.05 part by weight of azobisisobutyronitrile (a polymerization initiator), 0.0005 part by weight of a dye "NK 5450" having the maximum absorption wavelength at 582 nm (available from Hayashibara Biochemical Laboratories, Inc.) and 0.0005 part by weight of a dye "NK 5705" having the maximum absorption wavelength at 492 nm (available from Hayashibara Biochemical Laboratories, Inc.) were added and mixed. Then, the mixture was filled in a polymerization cell comprising a pair of glass plates and a polyvinyl chloride gasket for sealing the periphery of the glass plates, and heated to polymerize methyl acrylate. Thereby a transparent sheet of polymethyl methacrylate having a thickness of 2 mm was obtained.

The light transmittance of the sheet was measured with a spectrophotometer (U-4000 manufactured by Hitachi Ltd.) in the wavelength range of 380 nm to 780 nm at a wavelength interval of 5 nm. The results are shown in Table 1.

Table 1

| Total light transmittance | Light transmittance at | | | | |
|---|---|---|---|---|---|
| | 450 nm | 490 nm | 545 nm | 580 nm | 610 nm |
| 75.7% | 46.5% | 27.8% | 53.8% | 39.0% | 56.9% |

A commercially available color LCD having the structure of Fig. 1 and a color reproducibility ($G_{amut}$) of 75% was assembled. Then, the transparent sheet produced in the above step was laminated on the light diffuser plate (8) provided on the backside of the image-displaying unit (5). Accordingly, the color reproducibility increased to 80%, and the color LCD displayed a color image in which a human skin was reproduced with a natural color.

A color reproducibility ($G_{amut}$) was measured by obtaining a color-reproducing range displayed on the color LCD (1) using a CIE chromaticity diagram defined by Commission Internationale de l'Eclairage, and calculating an area ratio of the color-reproducing range obtained to the color-reproducing range determined by National Television System Committee. This area ratio was used as a color reproducibility ($G_{amut}$).

**Claims**

1.  A wavelength-selective light-absorbing optical element wherein a light transmittance at a wavelength of 450 nm (T450), a light transmittance at a wavelength of 545 nm (T545) and a light transmittance at a wavelength of 610 nm (T610) satisfy the following relationship (I):

$$T450 < T545 < T610 \qquad (I)$$

2.  The wavelength-selective light-absorbing optical element according to claim 1, which has a light transmittance at a wavelength of 580 nm (T580) satisfying the following equation (II):

$$T580 \leq 0.9 \times (T450+T545+T610)/3 \qquad (II)$$

3.  The wavelength- selective light-absorbing optical element according to claim 1 or 2, which has a light transmittance at a wavelength of 490 nm (T490) satisfying the following equation (III) :

$$T490 \leq 0.9 \times (T450+T545+T610)/3 \qquad (III)$$

4.  The wavelength-selective light-absorbing optical element according to claim 1, 2, or 3, which is installed and used in a color liquid crystal display.

5.  The wavelength-selective light-absorbing optical element according to claim 4, which is an optical element selected from the group consisting of a light-guide plate, a light diffuser plate, a prism sheet and a front plate which constitute a color liquid crystal display.

6.  A color liquid crystal display comprising an image-displaying unit which comprises a liquid crystal cell, a polarizing sheet and a color filter, and a cold cathode fluorescent lamp (CCFL) for illuminating said image-displaying unit, wherein a wavelength-selective light-absorbing optical element according to claim 1, 2, 3, 4 or 5, is installed along an optical path between said cold cathode fluorescent lamp (CCFL) and said image-displaying unit, in said image-displaying unit, or on a front face of said image-displaying unit.

Fig. 1

Fig. 2

| European Patent Office | EUROPEAN SEARCH REPORT | Application Number EP 06 12 4376 |
|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 06 138316 A (SEIKO EPSON CORP) 20 May 1994 (1994-05-20) * abstract * * paragraph [0015] - paragraph [0033] * * figures 1,4,8 * ----- | 1-6 | INV. G02B5/22 G02F1/1335 |
| | | | TECHNICAL FIELDS SEARCHED (IPC) |
| | | | G02B G02F |

The present search report has been drawn up for all claims

| Place of search | Date of completion of the search | Examiner |
|---|---|---|
| Munich | 28 February 2007 | Schenke, Cordt |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 06 12 4376

This annex lists the patent family members relating to the patent documents cited in the above-mentioned European search report.
The members are as contained in the European Patent Office EDP file on
The European Patent Office is in no way liable for these particulars which are merely given for the purpose of information.

28-02-2007

| Patent document cited in search report | Publication date | Patent family member(s) | Publication date |
|---|---|---|---|
| JP 6138316 A | 20-05-1994 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 10319231 A